# EUROPÄISCHE PATENTSCHRIFT

(11) **EP 0 732 186 B1**
(45) Veröffentlichungstag und Bekanntmachung des Hinweises auf die Patenterteilung: **12.07.2000**
(21) Anmeldenummer: 96103510.2
(22) Anmeldetag: 07.03.1996
(51) Int. Cl.: B29C 47/12, B29C 47/08

(54) **Extrusionskopf für Kunststoffextruder**
Extrusion head for plastics extruder
Tête d'extrusion pour extrudeuse de plastiques

(30) Priorität: 15.03.1995 DE 19509376
(43) Veröffentlichungstag der Anmeldung: 18.09.1996
(73) Patentinhaber: WAVIN B.V., 8011 CW Zwolle (NL)
(72) Erfinder: Fehrmann, Heinz, 49733 Haren (DE)
(74) Vertreter: Busse & Busse Patentanwälte

(56) Entgegenhaltungen:
- US-A- 2 740 158
- US-A- 2 979 768
- PATENT ABSTRACTS OF JAPAN vol. 005, no. 043 (M-060), 23.März 1981 & JP-A-56 000142 (MATSUSHITA ELECTRIC WORKS LTD), 6.Januar 1981,

## Beschreibung

Die Erfindung bezieht sich auf einen Extrusionskopf für Kunststoffextruder mit einem von einem Innen- und einem Außenkonus gebildeten Düsenkopf.

Bei einer herkömmlichen Ausführung des Extrusionskopfes mit einer Brecherplatte axial nachgeordnetem Düsenkopf bedarf es für die Extrusion eines anderen, insbesondere in seinen Abmessungen abweichenden Produktes eines Wechsels entweder des gesamten, überaus schweren und schwer zu handhabenden Extrusionskopfes oder aber zumindest dessen Düsenkopfes, was in beiden Fällen mit erheblichem Aufwand verbunden ist und eine im allgemeinen mehrstündige Stillsetzung des Extruders erfordert. Um zu vermeiden, daß sich der im Extruder befindliche, für die vorausgegangene Produktion verwendete Kunststoff verfestigt und die mit dem Kunststoff in Berührung stehenden Aggregate des Extruders verstopft oder gar unbrauchbar macht, muß der Extruder vor dem eigentlichen Wechselvorgang mit einer speziellen Kunststoffmasse betrieben werden, die nicht verbrennen, degradieren und sich nicht verfestigen kann und zudem günstige Aufheiz- und Wärmeleiteigenschaften darbietet.

Bei einem Extrusionsquerkopf mit zur Extrusionsrichtung des Extruders orthogonal ausgerichtetem Düsenkopf gemäß dem Oberbegriff des Anspruchs 1 (US-A-27 40 158) ist es bereits bekannt, den Außen- und den Innenkonus im Mündungsbereich des Düsenkopfes mit einem den Düsenkanal außen- bzw. innenseitig begrenzenden Einsatzteil zu versehen, die Einsatzteile am Außen- bzw. Innenkonus jeweils voneinander unabhängig festzulegen und jeweils im Schnellwechsel gegen andere Einsatzteile austauschbar zu machen, um eine schnellere Ausrüstung des Werkzeugs zu erbringen. Das innere Einsatzteil bildet dabei den kompletten Innenkonus im Mündungsbereich, und beide Einsatzteile werden mittels einer bajonettartigen Verriegelungsvorrichtung in Stellung gehalten.

Die Erfindung befaßt sich mit dem Problem, einen Extrusionskopf zu schaffen, der schnell, mit geringem Aufwand und präzise für das Extrudieren eines anderen Produktes einrichtbar ist. Die Erfindung löst dieses Problem durch einen Extrusionskopf mit den Merkmalen des Anspruchs 1. Hinsichtlich wesentlicher weiterer Ausgestaltungen wird auf die Ansprüche 2 bis 10 verwiesen.

Der Extrusionskopf nach der Erfindung ermöglicht ein Umrüsten für das Extrudieren eines abweichenden Produktes in einer außerordentlich kurzen Zeit, so daß der Einsatz eines speziellen Kunststoffes zur Vorbereitung von Wechselarbeiten entbehrlich ist. Der Umrüst- oder Einrichtungsvorgang ist dabei außerordentlich einfach und enthebt der Notwendigkeit zur Handhabung schwerer Teile. Da die Einsatzteile nur eine verhältnismäßig geringe Masse haben, können sie schnell und mit geringem Energieaufwand auf Betriebstemperatur gebracht werden. Auch die Vorbereitung der entnommenen Einsatzteile für eine spätere Wiederverwendung ist vergleichsweise gering.

Zahlreiche weitere Einzelheiten und Vorteile ergeben sich aus der nachfolgenden Beschreibung und der Zeichnung, in der ein Ausführungsbeispiel des Gegenstands der Erfindung näher veranschaulicht ist. In der Zeichnung zeigen:
- Fig. 1: einen Extrusionskopf nach der Erfindung, teils in Seitenansicht, teils im Axialschnitt,
- Fig. 2: eine Vorderansicht des Spannringes für die Festlegung des Einsatzteils des Außenkonus des Düsenkopfes in diesem,
- Fig. 3: einen Schnitt nach der Linie III-III in Fig. 2,
- Fig. 4: eine Seitenansicht einer Wechselhilfsvorrichtung, teilsweise im Schnitt,

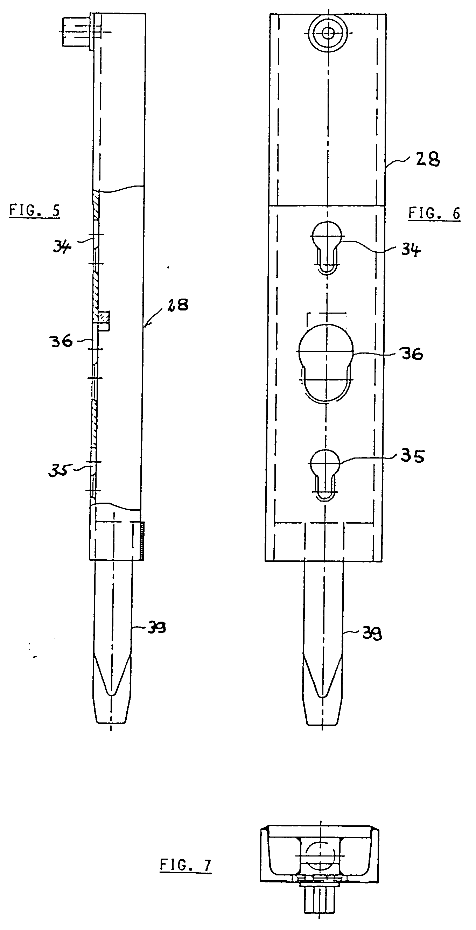

- Fig. 5: eine gesonderte Seitenansicht einer Trägerstrebe der Wechselhilfsvorrichtung, teilweise im Schnitt,
- Fig. 6: eine Vorderansicht zu Fig. 5, und
- Fig. 7: eine Draufsicht zu Fig. 6.

Der in der Zeichnung dargestellte Extrusionskopf 1 umfaßt einen Düsenkopf 2, der einer Brecherplatte 3 in Extrusionsrichtung 4 axial nachgeordnet ist. Der Düsenkopf 2 wird von einem Außenkonus 5 und einem Innenkonus 6 gebildet, die gemeinschaftlich außen- bzw. innenseitig einen Düsenkanal 7 begrenzen, durch den die zu extrudierende plastische Kunststoffmasse hindurchgepreßt wird, bevor sie beispielsweise in Gestalt eines zylindrischen Rohres bei 8 aus dem Düsenkanal 7 austritt.

Der Außen- und der Innenkonus 5,6 sind in einem Mündungsbereich des Düsenkopfes 2 jeweils mit einem Einsatzteil 9 bzw. 10 versehen, die in ihrem Bereich den Düsenkanal 7 außen- bzw. innenseitig begrenzen.

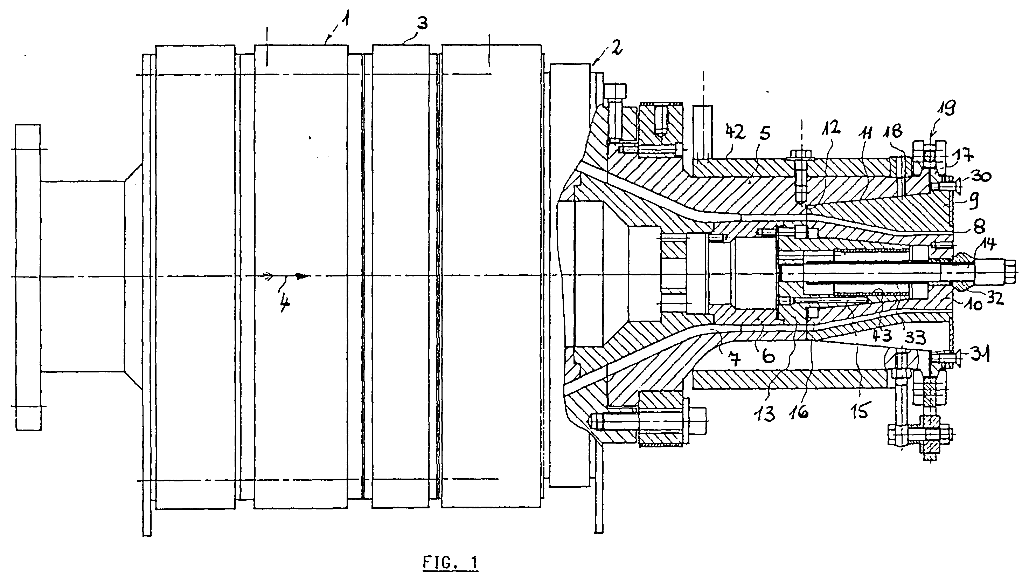

Das Einsatzteil 9 im Außenkonus 5 steht mit einer sich gegen Extrusionsrichtung 4 konisch verjüngenden Umfangsfläche 11 und mit einer an diese innenseitig angrenzenden innere Stirnfläche 12 an entsprechenden formgleichen Gegenflächen des Außenkonus 5 in Eingriff, wenn er sich wie in Fig. 1 in seiner Betriebsstellung befindet. Dieser Flächeneingriff sichert eine präzise Zentrierung des Einsatzteils 9 und gewährleistet eine große Wärmeübergangsfläche für einen guten Wärmeübergang zwischen Einsatzteil 9 und Außenkonus 5, der mit Heiz- oder Kühlmitteln versehen sein kann.

Das Einsatzteil 10 des Innenkonus 6 befindet sich in seiner Betriebsstellung auf einem zentralen Führungsteil 13 des Innenkonus 6 und ist auf diesem mittels einer mit dem Führungsteil 13 verschraubten, zentralen Kopfschraube 14 festgelegt. Der Einsatzteil 10 des Innenkonus 6 steht dabei mit einer sich in Extrusionsrichtung 4 konisch verjüngenden Innenfläche 15 und mit einer an diese angrenzenden, inneren Stirnfläche 16 an entsprechenden Gegenflächen des Führungsteils 13 in Eingriff. Die Stirnflächen 12,16 sind wie dargestellt vorteilhaft radial ausgerichtet und liegen in einer gemeinsamen Ebene, so daß die axiale Länge beider Einsatzteile 9,10 übereinstimmt.

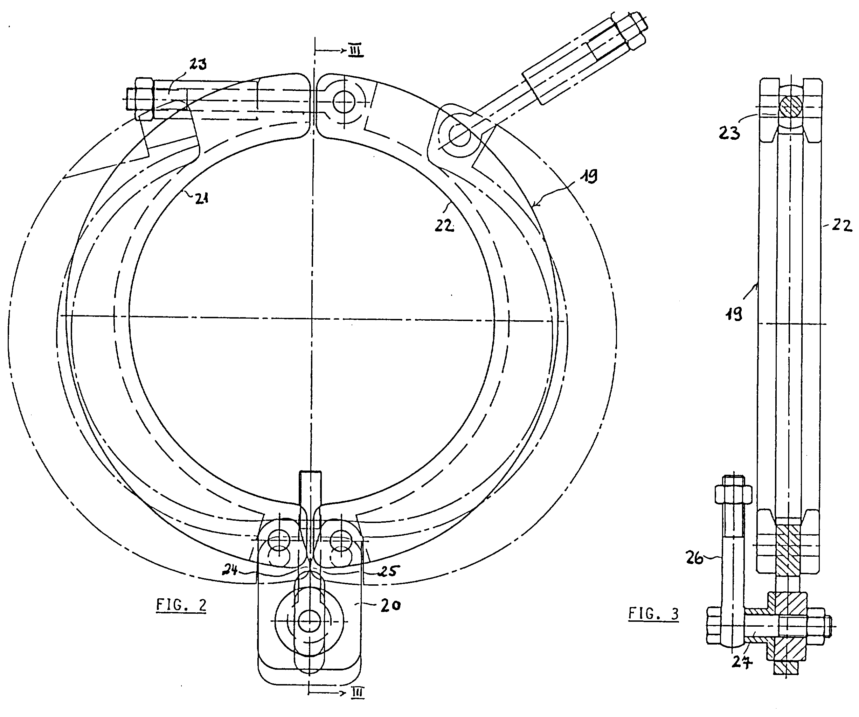

Das Einsatzteil 9 des Außenkonus 5 ist im Bereich seines Mündungsendes mit einem konischen Klemmflansch 17 versehen, dem in Betriebsstellung des Einsatzteils 9 ein konischer Klemmflansch 18 am Ende des Außenkonus 5 gegenüberliegt. Der Einsatzteil 9 und der Außenkonus 5 sind an diesen beiden Klemmflanschen 17,18 mittels eines diese umgreifenden Spannrings 19 verbunden, der in Fig. 2 und 3 näher veranschaulicht ist. Der Spannring 19 besteht aus zwei an einem Verbindungsstück 20 gelenkig angreifenden Halbteilen 21,22, die in ihrer Schließstellung in Fig. 2 veranschaulicht und in dieser durch eine Spannschraube 23 fixiert sind. Die Halbteile 21,22 des Spannrings 19 sind radial gegenläufig in eine in Fig. 2 in strichpunktierten Linien veranschaulichte Offenstellung aufklappbar, die durch Anschläge 24,25 an den gelenkseitigen Enden der Halbteile 21,22, definiert ist. Der Spannring 19 ist mittels einer Halteschraube 26 am Außenkonus 5 festgelegt, die auf einer das Verbindungsstück 20 durchgreifenden Trägerschraube 21 angebracht ist.

Beide Einsatzteile 9,10 sind mündungsseitig mit Kupplungsgliedern für eine Verbindung mit einem Stütz- oder Greiferteil 28 einer Wechselhilfsvorrichtung 29 versehen, mit deren Hilfe die Einsatzteile 9,10 entweder gemeinsam oder wahlweise einzeln von den Konen 5,6 des Düsenkopfes 2 abnehmbar, in diese wieder einsetzbar oder in eine Warte- oder Lagerposition verbringbar sind.

Bei dem dargestellten Ausführungsbeispiel sind als Kupplungsglieder am Einsatzteil 9 des Außenkonus 5 Schrauben mit hintergreifbaren Köpfen 30,31 vorgesehen. Bevorzugt sind dabei die Schrauben auf einer senkrechten Verbindungslinie gelegen, auf der sich auch das hintergreifbare Kopfstück 32 einer Führungshülse 33 befindet, welche den Schaft der zentralen Kopfschraube 14 umgibt und das Führungsteil 13 zur Kopfschraube 14 hin abstützt.

Die das Stütz- oder Greiferteil der Wechselhilfsvorrichtung 29 bildende Trägerstrebe 28 ist mit schlüssellochförmigen Aufnahmeöffnungen 34,35 für die Kupplungsglieder 30,31 des Einsatzteils 9 und mit einer schlüssellochförmigen Aufnahmeöffnung 36 für die Aufnahme des Kupplungsteils 32 des Einsatzteils 10 versehen, so daß die Kupplungsglieder 30,31,32 beider Einsatzteile 9,10 mit der Trägerstrebe 28 kuppelbar sind, die eine Lastangriffsöse 37 an ihrem oberen Ende für das Einhängen eines Lasthakens eines Hebezeugs aufweist. Nach dem Kuppeln der Trägerstrebe 28 mit im Düsenkopf eingebauten Kupplungsteilen 30,31,32 kann die zentrale Kopfschraube 14 gelöst und der Spannring 19 geöffnet werden, wonach die Einsatzteile 9,10 gemeinsam axial in Fig. 1 nach rechts aus ihren Konen 5,6 herausbewegt und beispielsweise in ein Traggestell 29 einsetzbar sind. Dieses Traggestell 29 kann zusammen mit der Trägerstrebe 28 oder mehreren Trägerstreben dieser Art die Wechselhilfsvorrichtung bilden, kann jedoch auch Teil einer Wechselhilfsvorrichtung sein, die orthogonale Horizontalschiebeführungen für das Traggestell 29 umfaßt, um so das Entnehmen der nicht mehr benötigten Einsatzteile 9,10 und das Wiedereinführen anderer Einsatzteile 9,10 für in den Düsenkopf 2 für die Herstellung eines anderen Produktes zu erleichtern und zu präzisieren.

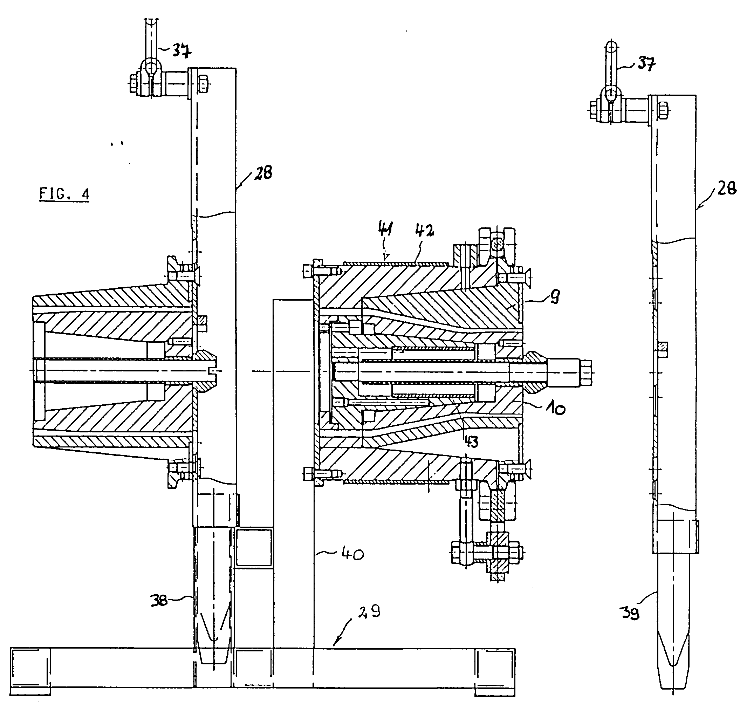

Das Traggestell 29 der in Fig. 4 beispielsweise veranschaulichten Ausführung weist eine Aufnahmehülse 38 auf, in die die Trägerstrebe 28 mit einem angepaßten unteren Einsteckende 39 von oben her einsetzbar ist. Ferner umfaßt das Traggestell 29 eine Stützstrebe 40, an der ein Aufnahmeteil 41 abgestützt ist, das einem Teilbereich des Außen- und des Innenkonus 5,6 des Düsenkopfes 2 entspricht und beispielsweise wie der Außenkonus 5 und der Innenkonus 6 mit einer Heizvorrichtung 42 bzw. 43 versehen ist. Im Aufnahmeteil 41 können beide Einsatzteile 9,10 untergebracht werden, wie sie beispielsweise als neue Einsatzteile bei einem Umrüsten des Extruderkopfes 1 benötigt werden, um sie gegebenenfalls nach Vorwärmung dann mit Hilfe einer Trägerstrebe 28 gemeinsam, oder auch einzeln, in den Düsenkopf 2 zu überführen. Daher kann nach dem Einsetzen der Einsatzteile 9,10, Schließen des Spannrings 19 und Festziehen der zentralen Kopfschraube 14 der Extrusionsvorgang sofort wieder fortgesetzt werden. Für einen Wechselvorgang werden in der Regel nur wenige Minuten benötigt, so daß mit dem zuvor im Extruder gefahrenen Kunststoff die Extrusion eines anderen, in den Abmessungen, z.B. dem Durchmesser und der Wanddicke, geänderten Rohrs begonnen werden kann. Die Gestaltung der Einsätze 9,10 und der Konen 5,6 kann so vorgenommen werden, daß ein relativ weiter Bereich an Wanddicken-, Durchmesser-, Form- und/oder Materialveränderungen durch Einsatzteilsätze abgedeckt werden kann. Sofern erforderlich kann der Bereich an Abmessungs- oder sonstigen Variationen noch dadurch vergrößert werden, daß Teile des Außen- und des Innenkonus 5,6 in einem Extra-Wechselgang gegen solche ausgewechselt werden, denen wiederum ein besonderer Satz Einsatzteile 8,10 zugeordnet werden kann.

Die Einsatzteile 9,10 haben ein geringes Gewicht, das sich in der Größenordnung von etwa 5% oder darunter des Gewichts eines sonst üblicherweise gewechselten Düsenkopfes bewegt. Die relativ kleinen und leichten Teile können leicht und platzsparend magazinisiert sowie schnell und einfach für einen Einsatz vorbereitet werden.

## Patentansprüche

1. Extrusionskopf (1) für Kunststoffextruder, mit einem einer Brecherplatte nachgeordneten, von einem Außen-(5) und einem Innenkonus (6) gebildeten Düsenkopf (2), von denen der Außen- und der Innenkonus (5,6) im Mündungsbereich des Düsenkopfes (2) jeweils mit einem den Düsenkanal (7) außenseitig bzw. innenseitig begrenzenden Einsatzteil (9;10) versehen, die Einsatzteile (9;10) jeweils am Außen-(5) bzw. am Innenkonus (6) voneinander unabhängig festlegbar und im Schnell-wechsel jeweils gegen andere Einsatzteile austauschbar sind, **dadurch gekennzeichnet**, daß der Düsenkopf (2) der Brecherplatte (3) in Extrusionsrichtung (4) axial nachgeordnet ist, das Einsatzteil (10) des Innenkonus (6) mit einer sich in Extrusionsrichtung (4) konisch verjüngenden Innenfläche (15) und mit einer an diese angrenzenden inneren Stirnfläche (16) an entsprechenden Gegenflächen eines zentralen Führungsteils (13) in Eingriff steht, und das Einsatzteil (10) auf dem Führungsteil (13) mittels einer mit dem Führungsteil (13) verschraubbaren, zentralen Kopfschraube (14) festlegbar ist.

2. Extrusionskopf nach Anspruch 1, **dadurch gekennzeichnet**, daß das Einsatzteil (9) im Außenkonus (5) mit einer sich gegen Extrusionsrichtung (4) konisch verjüngenden Umfangsfläche (11) und mit einer an diese angrenzenden inneren Stirnfläche (12) an entsprechenden Gegenflächen des Außenkonus (5) flächenbündig in Eingriff steht.

3. Extrusionskopf nach Anspruch 1 oder 2, **dadurch gekennzeichnet**, daß die Stirnflächen (12;16) beider Einsatzteile (9;10) radial ausgerichtet und in
einer gemeinsamen Ebene gelegen sind.

4. Extrusionskopf nach einem der Ansprüche 1 bis 3, **dadurch gekennzeichnet**, daß das Einsatzteil (9) des Außenkonus (5) mit diesem mittels eines konische Klemmflansche (17;18) an diesen umgreifenden Spannrings (19) verbindbar ist.

5. Extrusionskopf nach Anspruch 4, **dadurch gekennzeichnet**, daß der Spannring (19) aus zwei gelenkig verbundenen, radial durch Anschläge (24,25) begrenzt aufklappbaren Halbteilen (21,22) besteht.

6. Extrusionskopf nach einem der Ansprüche 1 bis 5, **dadurch gekennzeichnet,** daß beide Einsatzteile mündungsseitig mit Kupplungsgliedern für eine Verbindung mit einem Stütz- oder Greiferteil (28) einer Wechselhilfsvorrichtung (29) versehen sind, mittels der die Einsatzteile (9;10) gemeinsam oder wahlweise einzeln abnehm-, an- und/oder umsetzbar sind.

7. Extrusionskopf nach Anspruch 6, **dadurch gekennzeichnet**, daß als Kupplungsglieder am Einsatzteil (9) des Außenkonus (5) hintergreifbare Köpfe (30,31) von zwei senkrecht übereinander angeordneten Schrauben vorgesehen sind, und das Kupplungsglied am Einsatzteil (10) des Innenkonus (6) von einem hintergreifbaren Kopfstück (32) einer den Schaft der zentralen Kopfschraube (14) umgebenden Führungshülse (33) gebildet ist, das mit den Kupplungsgliedern (30,31) des Einsatzteils (9) des Außenkonus (5) auf einer gemeinsamen Verbindungslinie gelegen ist.

8. Extrusionskopf nach Anspruch 6 oder 7, **dadurch gekennzeichnet**, daß er mit einer Wechselhilfsvorrichtung (29) verbindbar ist, die als Stütz- oder Greiferteil eine mit schlüssellochförmigen Aufnahmeöffnungen versehene Trägerstrebe (28) aufweist, die in ein Traggestell (29) einsetzbar ist.

9. Extrusionskopf nach Anspruch 8, **dadurch gekennzeichnet**, daß die Wechselhilfsvorrichtung (29) als Ganzes in Längs- und/oder Querrichtung verschiebbar ist oder in Längs- und/oder Querrichtung verschiebbar geführte Stütz- und Greiferteile aufweist.

10. Extrusionskopf nach Anspruch 9, **dadurch gekennzeichnet**, daß die Wechselhilfsvorrichtung (29) ein Aufnahmeteil (41), das einem Teilbereich des Außen- und des Innenkonus (5,6) des Düsenkopfes (2) entspricht, aufweist, in das beide Einsatzteile (9,10) einsetzbar sind und das mit einer Heizvorrichtung (42,43) versehen ist, mittels der zumindest eines der Einsatzteile vorheizbar ist.

## Claims

1. An extrusion head (1) for synthetic plastics extruders, with, disposed downstream of a crusher plate and constituted by an outer (5) and an inner (6) cone, a nozzle head (2) of which the outer and the inner cone (5,6) are, in the mouth area of the nozzle head (2), respectively provided with an insert part (9,10) respectively externally and internally defining the nozzle channel (7), the insert parts (9,10) being respectively and independently of each other lockable on the outer (5) and inner (6) cone and adapted for rapid exchange for other insert parts, characterised in that the nozzle head (2) is disposed axially downstream of the crusher plate (3) in the direction (4) of extrusion, the insert part (10) of the inner cone (6) is provided with an inner surface (15) tapering conically in the direction (4) of extrusion and by which it engages an inner end face (16) adjacent the inner surface (15) and provided on corresponding mating surfaces of a central guide part (13), the insert part (10) being lockable on the guide part (13) by means of a central cap screw (14) which can be screwed together with the guide part (13).

2. An extrusion head according to Claim 1, characterised in that the insert part (9) in the outer cone (5) has a peripheral surface (11) tapering conically in the extrusion direction (4) by which it engages an inner end face (12) adjacent thereto and provided on corresponding mating surfaces of the outer cone (5).

3. An extrusion head according to Claim 1 or 2, characterised in that the end faces (12,16) of both insert parts (9,10) are radially orientated and are situated in one common plane.

4. An extrusion head according one of Claims 1 to 3, characterised in that the insert part (9) of the outer cone (5) can, by means of a conical clamping flange (17,18), be connected to a clamping ring (19) engaging around the latter.

5. An extrusion head according to Claim 4, characterised in that the clamping ring (19) consists of two articulatingly connected half-parts (21,22) adapted to be opened up radially by an amount which is restricted by abutments (24,25).

6. An extrusion head according to one of Claims 1 to 5, characterised in that both insert parts are, on the mouth side, provided with coupling members for connection to a supporting or gripping part (28) of an exchange-assisting device (29) by means of which the insert parts (9,10) can be jointly or, if desired, individually removed, fitted and/or relocated.

7. An extrusion head according to Claim 6, characterised in that the heads (30,31) of two screws disposed vertically above each other are, as coupling members, adapted to engage behind the insert part (9) of the outer cone (5), the coupling member on the insert part (10) of the inner cone (6) being constituted by a head piece (32) of a guide sleeve (33) engaging around the shank of the central cap screw (14) and which is situated on a common line connecting the coupling members (30,31) of the insert part (9) of the outer cone (5).

8. An extrusion head according to Claim 6 or 7, characterised in that it is adapted to be connected to an exchange-assisting device (29) which, as a supporting or gripper part, comprises a carrier strut (28) provided with keyhole-shaped receiving apertures and which is capable of insertion into a carrier frame (29).

9. An extrusion head according to Claim 8, characterised in that the exchange-assisting device (29) is displaceable as a whole in longitudinal and/or transverse directions or comprises supporting and gripper parts which are guided for displacement in the longitudinal and/or transverse directions.

10. An extrusion head according to Claim 9, characterised in that the exchange-assisting device (29) comprises a receiving part (41) which corresponds to a partial area of the outer and inner cones (5,6) of the nozzle head (2) and into which both insert parts (9,10) can be inserted and which is provided with a heating device (42,43) by means of which at least one of the insert parts can be preheated.

## Revendications

1. Tête d'extrusion (1) pour extrudeuse de matières plastiques, comportant une tête de filière (2) agencée en aval d'une plaque de broyage et formée d'un cône externe (5) et d'un cône interne (6), dont les cônes externe et interne (5,6) sont pourvus, dans la zone où débouche la tête de filière (2), respectivement d'une pièce rapportée (9;10) délimitant extérieurement ou, selon le cas, intérieurement le canal de filière (7), les pièces rapportées (9;10) pouvant être fixées, indépendamment l'une de l'autre, sur le cône externe (5) ou, selon le cas, le cône interne (6) et pouvant être respectivement échangées avec d'autres pièces rapportées lors d'un échange rapide, caractérisée en ce que la tête de filière (2) est agencée axialement en aval de la plaque de broyage (3) dans le sens de l'extrusion (4), la pièce rapportée (10) du cône interne (6) est en prise avec une surface interne (15) s'amincissant en cône dans le sens d'extrusion (4) et avec une surface frontale interne (16) contiguë à la première surface sur des surfaces antagonistes correspondantes d'une partie de guidage centrale (13), et la pièce rapportée (10) peut être fixée sur la partie de guidage (13) au moyen d'une vis à tête centrale (14) qui peut être vissée sur la partie de guidage (13).

2. Tête d'extrusion selon la revendication 1, caractérisée en ce que la pièce rapportée (9) dans le cône externe (5) est en prise avec une surface périphérique (11) s'amincissant en cône à l'opposé du sens d'extrusion (4) et avec une surface frontale interne (12) contiguë à la première surface sur des surfaces antagonistes du cône externe (5) à fleur.

3. Tête d'extrusion selon la revendication 1 ou 2, caractérisée en ce que les surfaces frontales (12,16) des deux pièces rapportées (9;10) sont alignées radialement et se trouvent dans un plan commun.

4. Tête d'extrusion selon l'une des revendications 1 à 3, caractérisée en ce que la pièce rapportée (9) du cône externe (5) peut être raccordée à celui-ci au moyen d'une bride de blocage conique (17;18) sur le collier tendeur (19) entourant celui-ci.

5. Tête d'extrusion selon la revendication 4, caractérisée en ce que le collier tendeur (19) est constitué de deux demi-parties (21,22) raccordées par articulation et rabattables radialement de manière limitée par des butées (24,25).

6. Tête d'extrusion selon l'une des revendications 1 à 5, caractérisée en ce que les deux pièces rapportées sont pourvues, côté embouchure, d'éléments d'accouplement permettant une liaison avec un élément d'appui ou de prise (28) d'un dispositif auxiliaire d'échange (29), au moyen duquel les pièces rapportées (9;10) peuvent être, conjointement ou au choix individuellement, retirées, installées et/ou remplacées.

7. Tête d'extrusion selon la revendication 6, caractérisée en ce qu'il est prévu comme éléments d'accouplement sur la pièce rapportée (9) du cône externe (5) des têtes d'accrochage (30,31) de deux vis agencées verticalement l'une au-dessus de l'autre, et l'élément d'accouplement sur la pièce rapportée (10) du cône interne (6) est formé d'une pièce de tête d'accrochage (32) d'une douille de guidage (33) entourant la tige de la vis à tête centrale (14), ladite pièce de tête d'accrochage étant disposée sur une ligne de raccordement commune avec les éléments d'accouplement (30,31) de la pièce rapportée (9) du cône externe (5).

8. Tête d'extrusion selon la revendication 6 ou 7, caractérisée en ce qu'elle peut être raccordée à un dispositif auxiliaire d'échange (29) qui présente, comme partie d'appui ou de prise, un montant de support (28) pourvu d'ouvertures de logement en forme de trou de serrure qui peut être inséré dans un châssis de support (29).

9. Tête d'extrusion selon la revendication 8, caractérisée en ce que le dispositif auxiliaire d'échange (29) peut être déplacé dans son ensemble dans la direction longitudinale et/ou transversale ou présente des parties d'appui ou de prise- guidées de manière à pouvoir coulisser dans la direction longitudinale et/ou transversale.

10. Tête d'extrusion selon la revendication 9, caractérisée en ce que le dispositif auxiliaire d'échange (29) présente une partie réceptrice (41), qui correspond à une zone partielle du cône externe et du cône interne (5,6) de la tête de filière (2), dans laquelle les deux pièces rapportées (9,10) peuvent être insérées et qui est pourvue d'un dispositif de chauffage (42,43) au moyen duquel au moins l'une des pièces rapportées peut être préchauffée.
